# EUROPÄISCHE PATENTSCHRIFT

(11) **EP 4 556 863 B1**
(45) Veröffentlichungstag und Bekanntmachung des Hinweises auf die Patenterteilung: **17.12.2025**
(21) Anmeldenummer: 24211817.2
(22) Anmeldetag: 08.11.2024
(51) Int. Cl.: G01D 13/02, G01D 7/00

(54) **ANZEIGEVORRICHTUNG FÜR EINE ANLAGE DER AUTOMATISIERUNGS- UND PROZESSMESSTECHNIK**
DISPLAY DEVICE FOR AN INSTALLATION OF AUTOMATION AND PROCESS MEASUREMENT TECHNOLOGY
DISPOSITIF D'AFFICHAGE POUR UNE INSTALLATION DE MESURE D'AUTOMATISATION ET DE PROCESSUS

(30) Priorität: 17.11.2023 DE 102023132092
(43) Veröffentlichungstag der Anmeldung: 21.05.2025
(73) Patentinhaber: ifm electronic gmbh, 45128 Essen (DE)
(72) Erfinder: Halbinger, Lorenz, 88353 Kißlegg (DE)
(74) Vertreter: Ifm Patentabteilung

(56) Entgegenhaltungen:
- DE-A1- 102008 013 036
- DE-A1- 102009 017 783
- DE-U1- 29 703 904
- US-A1- 2020 132 525

## Beschreibung

Die Erfindung betrifft eine Anzeigevorrichtung gemäß dem Oberbegriff des Anspruchs 1.

Anzeigevorrichtungen der vorgenannten Art werden in der Automatisierungs- und Prozessmesstechnik vielfältig eingesetzt, bspw. zur Druck- und Temperaturüberwachung in Behältern und Rohrleitungen. Bei einer elektronischen Anzeigevorrichtung wird diese über eine typischerweise als Steckeranschluss ausgeführte Anschlussvorrichtung mit Spannung vorsorgt. Gleichzeitig können darüber Messwerte z. B. als 4-20mA-Signal an eine externe Steuereinheit, z. B. eine SPS, weitergeleitet werden. Eine derartige Anzeigevorrichtung zeigt bspw. das deutsche Patent DE 10 2009 017 783 B4 der Anmelderin.

Diese Anzeigevorrichtung umfasst auch einen Anzeigebereich mit einer kreisbogenförmigen Skala. Durch die Beschriftung der Skala mit Zahlenwerten, aber auch durch eine aufgedruckte Farbgebung, wird eine Unterteilung in verschiedene Abschnitte erreicht, durch die der Anwender insbesondere die Information entnehmen kann, ob der angezeigte Messwert in einem Gut-Bereich liegt oder in einem kritischen Schlecht-Bereich.

Je nach Anwendung kann diese konkrete Unterteilung der Skala in Gut- und Schlecht-Bereich sehr unterschiedlich ausfallen, so dass dem Anwender Anzeigevorrichtungen mit den jeweils gewünschten Aufdrucken in den Skalenausgestaltungen zur Verfügung gestellt werden müssen. Hier ergibt sich bereits der Bedarf nach einer höheren Flexibilität, in dem die Skalenausgestaltung vor Ort an die jeweiligen Anwendungen anpassbar ist.

Aus der Patentschrift DE 10 2008 013 036 B4 der Anmelderin ist bekannt, in dem Anzeigebereich ein austauschbares Anzeigeelement anzuordnen, wobei über ein Kodierelement erkannt wird, welches Anzeigeelement im Moment vorliegt.

Hinzukommt, dass bei bestimmten Betriebsbedingungen die Aufteilung in Gut- und Schlecht-Bereich variieren kann. So werden bspw. bei Anlagen in der Lebensmittel-oder Pharmaindustrie, d.h. bei Hygieneanwendungen, Reinigungsprozesse durchgeführt. Dabei strömt eine Reinigungsflüssigkeit mit Druck und z.T. hoher Temperatur durch die Anlage, so dass ein dann auf der Anzeigevorrichtung angezeigte Messwert in einem augenscheinlich kritischen Bereich liegen kann, obwohl es sich in diesem Fall um eine bewusste und kontrollierte Situation handelt.

Aufgabe der Erfindung ist es, die Skalenausgestaltung so auszugestalten, dass sie individuell einstellbar ist und temporär an bestimmte Betriebsbedingungen anpassbar ist.

Die Aufgabe wird durch eine Anzeigevorrichtung mit den Merkmalen des Anspruchs 1 gelöst. Vorteilhafte Ausgestaltungen der Erfindung sind in den Unteransprüchen angegeben.

Erfindungsgemäß weist der Anzeigebereich neben der Skala auch einen kreisbogenförmigen Lichtkranz aus RGB-Segmenten auf, der konzentrisch zur Skala verläuft. Der Lichtkranz ist dabei in mehrere Abschnitte unterteilt, die jeweils Messwerten oder Messwertbereichen auf der Skala zugeordnet sind. Die Ausdehnungen dieser Abschnitte entlang des Kreisbogens und/oder deren Farbgebung sind abhängig von einem über die Anschlussvorrichtung von der externen Steuereinheit empfangenen Signal veränderlich und sind daraus resultierend durch den Betrachter voneinander unterscheidbar. Das empfangene Signal repräsentiert dabei einen Betriebszustand der Anlage.

In einer Speichereinheit können entsprechende Konfigurationen zu verschiedenen Szenarien bzw. Betriebszuständen, wie bspw. Reinigungszyklen oder bestimmte Prozesssituationen beim Anlaufen der Anlage, abgelegt werden, die dann von der externen Steuerung abgerufen werden. Denkbar ist aber auch, über die Steuerung jeweils die entsprechenden Gut- und Schlecht-Bereiche - in der Anzeigevorrichtung bspw. als Grün- und Rotbereiche gekennzeichnet - situativ und zeitlich veränderlich zu definieren.

Die Kommunikation zwischen der externen Steuerung der Anzeigevorrichtung erfolgt vorteilhafterweise über IO-Link, einem standardisierten, feldbusunabhängigen Kommunikationssystem zur Anbindung intelligenter Sensoren und Aktoren an ein Automatisierungssystem. Es basiert auf der Norm IEC 61131-9 und ermöglicht eine bidirektionale Kommunikation zwischen Sensoren, Aktoren und dem Automatisierungssystem.

Vorteilhafterweise sind die RGB-Segmente als Leuchtdioden realisiert. Typischerweise erfolgt die Darstellung der Abschnitte in den Grundfarben Rot, Grün oder Gelb, wobei jedoch auch andere Farben darstellbar sind. Grundsätzlich kann jede der drei LED-Grundfarben in 256 Abstufungen dargestellt werden, wodurch insgesamt 16,7 Millionen Farben erzeugt werden können. Dies ermöglicht eine präzise und flexible Farbanpassung. Wird eine Anzeigevorrichtung, bspw. ein Manometer, mit einer solchen Skalenausgestaltung ausgerüstet, können also beliebige Farben über eine bestimmte Anzahl von Farbsegmenten einzeln oder in Blöcken den verschiedenen Farben zugeordnet bzw. ausgewählt oder eingestellt werden.

Durch die Erfindung wird nun vermieden, dass ein Betrachter auf der Anzeigevorrichtung ausgehend von der Zeigerstellung einen Schlecht-Bereich erkennt, obwohl nur ein Nebenprogramm gefahren wird, was keine negativen Auswirkungen auf die Anlage oder das Produkt hat.

Nachfolgend wird die Erfindung anhand von Ausführungsbeispielen unter Bezugnahme auf die Zeichnungen näher erläutert.

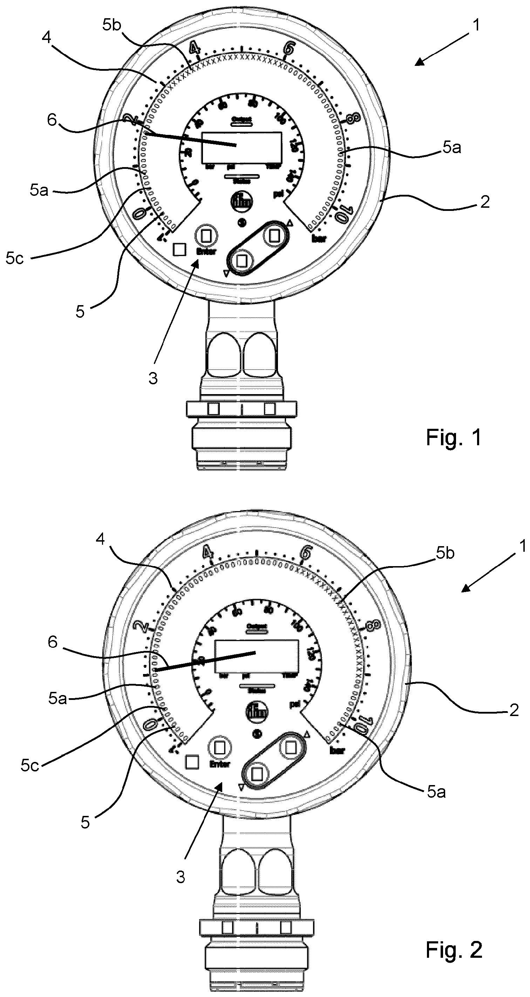

Die Figuren 1 und 2 zeigen jeweils schematisch eine erfindungsgemäße Anzeigevorrichtung mit jeweils unterschiedlicher Aufteilung der Abschnitte des Lichtkranzes. Bei der nachfolgenden Beschreibung der bevorzugten Ausführungsformen bezeichnen gleiche Bezugszeichen gleiche oder vergleichbare Komponenten.

Die in den Figuren 1 und 2 dargestellte Anzeigevorrichtung 1 ist vorliegend als Manometer, d.h. als ein Druckmessgerät ausgeführt, wie es bei einer Anlage der Automatisierungs- und Prozessmesstechnik häufig zum Einsatz kommt. Im Wesentlichen besteht die Anzeigevorrichtung 1 aus einem Gehäuse 2, einem in dem Gehäuse 2 angeordneten, von außen sichtbaren Anzeigebereich 3 und einer nicht gezeigten Anschlussvorrichtung zur Verbindung der Anzeigevorrichtung 1 mit einer externen Steuereinheit, bspw. einer SPS. Die Anschlussvorrichtung befindet sich vorliegend auf der Rückseite und ist als M12-Steckverbindung ausgeführt. Grundsätzlich denkbar sind jedoch auch drahtlose Verbindungen.

Der Anzeigebereich 3 umfasst eine kreisbogenförmige Skala 4. Konzentrisch dazu ist ein ebenfalls kreisbogenförmig verlaufender Lichtkranz 5 aus RGB-Segmenten 5c angeordnet, der in mehrere, unterschiedliche Kennzeichnungen aufweisende Abschnitte 5a, 5b unterteilt ist. Mittels eines Zeigers 6 kann dann der entsprechende Messwert abgelesen werden. Die Abschnitte 5a stellen vorliegend jeweils einen Schlecht-Bereich dar und sind in den Figuren als Aneinanderreihung des Symbols "o" verdeutlicht. In der Praxis ist dieser Bereich vorzugsweise in Form von leuchtenden roten LEDs als solcher erkennbar. Der Abschnitt 5b stellt vorliegend jeweils einen Gut-Bereich dar und ist in den Figuren als Aneinanderreihung des Symbols "x" verdeutlicht. In der Praxis ist dieser Bereich vorzugsweise in Form von leuchtenden grünen LEDs als solcher erkennbar. In den dargestellten Ausführungsformen wird der Gut-Bereich 5b jeweils von einem Schlecht-Bereich 5a umschlossen.

Die Aufteilung der Abschnitte 5a, 5b auf dem Lichtkranz 5 sind abhängig von einem über die Anschlussvorrichtung von der externen Steuereinheit empfangenen Signal veränderlich. Dadurch kann die Aufteilung der Abschnitte 5a, 5b an verschiedene Szenarien bzw. betriebszustände, wie bspw. Reinigungszyklen oder bestimmte Prozesssituationen beim Anlaufen der Anlage, angepasst werden. Vorliegend ist in Fig. 1 der Gut-Bereich 5b zwischen 3 und 6 bar, während er in Fig. 2 zwischen 6 und 9 bar liegt. Der Schlecht-Bereich 5a liegt entsprechend davor und danach.

### Bezugszeichenliste

- 1: Anzeigevorrichtung
- 2: Gehäuse
- 3: Anzeigebereich
- 4: Skala
- 5: Lichtkranz
- 5a: Abschnitt auf der Skala
- 5b: Abschnitt auf der Skala
- 5c: RGB-Segment
- 6: Zeiger

## Patentansprüche

1. Anzeigevorrichtung (1) für eine Anlage der Automatisierungs- und Prozessmesstechnik zum Anzeigen von Messwerten, mit einem Gehäuse (2), einem in dem Gehäuse (2) angeordneten, von außen sichtbaren Anzeigebereich (3) und einer Anschlussvorrichtung zur Verbindung der Anzeigevorrichtung (1) mit einer externen Steuereinheit,
wobei der Anzeigebereich (3) eine kreisbogenförmige Skala (4) umfasst,
**dadurch gekennzeichnet,**
**dass** der Anzeigebereich (3) des Weiteren einen kreisbogenförmigen Lichtkranz (5) aus RGB-Segmenten (5c) aufweist, der konzentrisch zur Skala (4) verläuft,
wobei der Lichtkranz (5) in mehrere Abschnitte (5a, 5b) unterteilt ist, die jeweils Messwerten oder Messwertbereichen auf der Skala (4) zugeordnet sind,
wobei die Ausdehnungen der Abschnitte (5a, 5b) entlang des Kreisbogens und/oder deren Farbgebung abhängig von einem über die Anschlussvorrichtung von der externen Steuereinheit empfangenen Signal veränderlich sind, wobei das empfangene Signal einen Betriebszustand der Anlage repräsentiert.

2. Anzeigevorrichtung nach Anspruch 1,
**dadurch gekennzeichnet, dass** die Anzeige der Messwerte mittels Zeiger (6) erfolgt.

3. Anzeigevorrichtung nach einem der vorhergehenden Ansprüche,
**dadurch gekennzeichnet, dass** die Abschnitte (5a, 5b) unterschiedliche Kennzeichnungen aufweisen, wobei sie sich insbesondere durch eine unterschiedliche Farbgebung voneinander unterscheiden.

4. Anzeigevorrichtung nach einem der vorhergehenden Ansprüche,
**dadurch gekennzeichnet, dass** in einer Speichereinheit für diverse Szenarien entsprechende Konfigurationen für die Ausdehnungen der Abschnitte (5a, 5b) entlang des Kreisbogens und/oder deren Farbgebung hinterlegt sind.

5. Anzeigevorrichtung nach einem der vorhergehenden Ansprüche,
**dadurch gekennzeichnet, dass** die Kommunikation zwischen der externen Steuerung und der Anzeigevorrichtung über IO-Link erfolgt.

6. Anzeigevorrichtung nach einem der vorhergehenden Ansprüche,
**dadurch gekennzeichnet, dass** der Betriebszustand der Anlage ein aktueller Produktions- oder Reinigungsschritt ist.

## Claims

1. Display device (1) for an automation and process measurement technology system for displaying measured values, said device comprising a housing (2), an externally visible display region (3) arranged in the housing (2), and a connection device for connecting the display device (1) to an external control unit,
the display region (3) comprising an arc-shaped scale (4),
**characterized in that**
the display region (3) additionally has an arc-shaped light ring (5) made of RGB segments (5c), which light ring extends concentrically to the scale (4),
the light ring (5) being divided into a plurality of portions (5a, 5b) which are each assigned to measured values or measured value ranges on the scale (4),
the dimensions of the portions (5a, 5b) along the arc and/or the coloring of said portions being variable depending on a signal received from the external control unit via the connection device, the received signal representing an operating state of the system.

2. Display device according to claim 1,
**characterized in that** the measured values are displayed by means of a pointer (6).

3. Display device according to either of the preceding claims,
**characterized in that** the portions (5a, 5b) have different markings, said portions differing from one another in particular by different colorings.

4. Display device according to any of the preceding claims,
**characterized in that** corresponding configurations for the dimensions of the portions (5a, 5b) along the arc and/or the coloring of said portions are stored in a memory unit for various scenarios.

5. Display device according to any of the preceding claims,
**characterized in that** communication between the external control unit and the display device takes place via IO-Link.

6. Display device according to any of the preceding claims,
**characterized in that** the operating state of the system is a current production or cleaning step.

## Revendications

1. Dispositif d'affichage (1) pour une installation de la technique d'automatisation et de mesure de processus pour l'affichage de valeurs de mesure, comportant un boîtier (2), une zone d'affichage (3) disposée dans le boîtier (2) et visible depuis l'extérieur et un dispositif de connexion permettant de relier le dispositif d'affichage (1) à une unité de commande externe,
dans lequel la zone d'affichage (3) comprend une échelle (4) en forme d'arc de cercle,
**caractérisé en ce**
**que** la zone d'affichage (3) présente en outre une couronne lumineuse (5) en forme d'arc de cercle constituée de segments RVB (5c) et s'étendant concentriquement à l'échelle (4),
dans lequel la couronne lumineuse (5) est divisée en plusieurs sections (5a, 5b) qui sont respectivement associées à des valeurs de mesure ou à des zones de valeurs de mesure sur l'échelle (4),
dans lequel les extensions des sections (5a, 5b) le long de l'arc de cercle et/ou leurs colorations sont variables en fonction d'un signal reçu en provenance de l'unité de commande externe par l'intermédiaire du dispositif de connexion, dans lequel le signal reçu représente un état de fonctionnement de l'installation.

2. Dispositif d'affichage selon la revendication 1,
**caractérisé en ce que** l'affichage des valeurs de mesure est effectué au moyen d'une aiguille (6).

3. Dispositif d'affichage selon l'une des revendications précédentes,
**caractérisé en ce que** les sections (5a, 5b) présentent des marquages différents, dans lequel lesdits marquages diffèrent les uns des autres en particulier par une coloration différente.

4. Dispositif d'affichage selon l'une des revendications précédentes,
**caractérisé en ce que** des configurations correspondantes pour les extensions des sections (5a, 5b) le long de l'arc de cercle et/ou leurs colorations sont enregistrées dans une unité de mémorisation pour divers scénarios.

5. Dispositif d'affichage selon l'une des revendications précédentes,
**caractérisé en ce que** la communication entre la commande externe et le dispositif d'affichage est effectuée par l'intermédiaire de la norme IO-Link.

6. Dispositif d'affichage selon l'une des revendications précédentes,
**caractérisé en ce que** l'état de fonctionnement de l'installation est une étape de production ou de nettoyage en cours.
